# EUROPEAN PATENT SPECIFICATION

(11) **EP 3 496 060 B1**
(45) Date of publication and mention of the grant of the patent: **11.01.2023**
(21) Application number: 17306736.4
(22) Date of filing: 08.12.2017
(51) Int. Cl.: G08B 17/10, G08B 13/00, G08B 19/00, G07C 9/00, F21S 9/02, G08C 17/00

(54) **MULTI-STATE DEVICE HAVING COMMUNICATION LINKS WITH A REMOTE CONTROL WITH IDENTIFYING CAPABILITIES**
VORRICHTUNG MIT MEHREREN ZUSTÄNDEN MIT KOMMUNIKATIONSVERBINDUNGEN MIT EINER FERNBEDIENUNG MIT IDENTIFIZIERUNGSFÄHIGKEITEN
DISPOSITIF À ÉTATS MULTIPLES PRÉSENTANT DES LIAISONS DE COMMUNICATION AVEC UNE TÉLÉCOMMANDE AYANT DES CAPACITÉS D'IDENTIFICATION

(43) Date of publication of application: 12.06.2019
(73) Proprietor: Netatmo, 92100 Boulogne Billancourt (FR)
(72) Inventor: CAZALIS, Romain, 78220 Viroflay (FR); POTTER, Frédéric, 92200 Neuilly-sur-Seine (FR)
(74) Representative: Atout PI Laplace

(56) References cited:
- EP-A2- 2 651 190
- US-A1- 2015 382 436
- US-A1- 2017 108 236
- US-B1- 9 408 282

## Description

### FIELD

The invention relates to the field of connecting a definite multi-state device to a remote control and, in particular, connecting a device configured to switch from one state to another state to a remote control with the purpose for a user to make the multi-state device switch from one state to another state remotely from the remote control. The invention concerns a device configured to be connected to a remote control and a method for controlling such a multi-state device using said remote control. Although many of the features of this invention will be described in relation to a smoke detector, or more generally a detector of a species, it is understood that they are generally applicable to many other devices such as any sensor or the like, as also mentioned in the examples.

### BACKGROUND

In many countries, the installation of smoke detectors has become mandatory in buildings and residences. The installation of a smoke detector allows detecting smoke emitted at the start of a fire. The smoke detector immediately emits a sound signal that is noisy enough to wake up a sleeping person. The smoke detector must conform to predetermined standards, for example the standard NF EN 14604 in Europe. There are detectors specially adapted for deaf people, using a light signal and/or vibrating signal.

The installation of such devices has proven to be a life saving measure, as the warning signal generally alerts people within the structure, to evacuate the building, residence in a timely manner. Very early detection allows to save lifes as well as to minimize fire effects as an alarm is raised at the very beginning of the problem.

It may happen that the smoke detector emits a sound signal even if there is no fire in the residence. For example, it is the case when cooking, and smoke escapes from the cooking device. The sound signal which is noisy enough to be heard in any situation is particularly upsetting. The user may stop the sound signal by switching the smoke detector off. Since smoke detectors should be placed in the vicinity of the room ceiling, it is not necessarily within the user's reach who may then use an extension, like a broom handle, to try to reach the switch of the smoke detector to switch the alarm off. This solution is absolutely not satisfying.

It is advantageous to be able to activate/deactivate the alarm of the smoke detector using a remote control, for example thanks to a signal sent from the remote control to the smoke detector. But this solution does not comply with the security requirements and may lead to a dangerous situation. Indeed when sending the RF signal to switch off the alarm of a smoke detector, for example, in the living-room, a smoke detector in a neighboring room may catch the signal and its alarm may be then switched off, which is not in accordance with the intention of the user. Seeing no effect on the alarm of the smoke detector of the living-room, the user may send the same signal again and this time, the alarm of the smoke detector of the living-room may be switched off, without being aware of the fact that the alarm of the smoke detector of the neighboring room is also switched off. Document US 2017/108236 discloses an environment control system configured to enable communication between the environment control system and external devices. Document US 2015/382436 discloses a multi-state device of the prior art.

### SUMMARY OF THE INVENTION

A solution to overcome this drawback is to ensure that the remote control interacts with a device selected by the user and not with another one. The invention aims at providing a device able to send an identifying code to the remote control configured to send this identifying code back to the device, to assure the user that he/she has designated the intended device. The invention also aims at providing a device switching from a state to another state after the request of the remote control, when the remote control is connected to this device.

To this end, the subject of the invention is a multi-state device comprising a communication port configured to receive one or more of a stimulus or a change state command from a remote control, a transmitter of an identifying code on a line-of-sight carrier, a controller configured to compare an identifying code received from the remote control to the identifying code of the multi-state device, the code received from the remote control being the identifying code transmitted by the multi-state device which has been converted into the identifying code of the multi-state device.

Advantageously, the communication port is a RF communication port. Advantageously the communication port is configured to receive a change state command from the remote control to activate the controller to make the multi-state device switch from the one state to the another state.

According to an embodiment of the invention, the multi-state device is a detector of a species comprising an alarm to be set on when the multi-state device detects the species and off otherwise, the one state being one of the alarm being off or the alarm being on and the another state being then the alarm being on or the alarm being off.

According to another embodiment of the invention, the multi-state device is a presence sensor comprising an alarm to be set on when the multi-state device detects a presence in a room and off otherwise, the one state being one of the alarm being off or the alarm being on and the another state being then the alarm being on or the alarm being off.

According to another embodiment of the invention, the multi-state device is a presence sensor configured to send a signal to another equipment when the multi-state device detects a presence in a room and to send no signal otherwise, the one state being one of no signal to be sent or the signal to be sent and the another state being then the signal to be sent or no signal to be sent.

According to another embodiment of the invention, the multi-state device is an opening comprising a lock to be in a locked position when the multi-state device is in the locked position and in an unlocked position otherwise, the one state being one of the unlocked position or the locked position and the another state being then the locked position or the unlocked position of the lock.

According to another embodiment of the invention, the multi-state device is a lamp having a light on when the multi-state device is in a on position and a light off when the multi-state device is in an off position, the one state being one of the off position or the on position and the another state being then the on position or the off position.

Advantageously, the remote control is a smart phone configured to receive the identifying code on a line-of-sight carrier, wherein the smart phone comprises a transmitter of an identifying code, the identifying code sent through the transmitter being identical to the identifying code on the line-of-sight carrier of the multi-state device.

Advantageously, the remote control comprises a camera configured to receive the identifying code using a line-of-sight carrier, the remote control comprising a transmitter of an identifying code, the identifying code sent through the transmitter of the remote control being identical to the identifying code on the line-of-sight carrier of the multi-state device.

Advantageously, the line-of-sight carrier is an infrared beam, or optical signal.

The invention also relates to a remote control configured to connect to a multi-state device comprising a RF transmitter configured to transmit one or more of a stimulus or a change state command to the multi-state device, a receiver configured to receive from the multi-state device an identifying code using a line-of-sight carrier, and to convert the identifying code received from the multi-state device into an RF identifying code of the multi-state device, the RF identifying code being identical to the identifying code on the line-of-sight carrier, the RF transmitter being configured to send the RF identifying code to the multi-state device. Advantageously the remote control is configured to send a change state command to activate or deactivate a controller of the multi-state device, to make the multi-state device switch from one state to another state after the communication with the multi-state device of the identifying code of the multi-state device.

The invention also relates to a method of controlling a multi-state device using a remote control, the method comprising the steps of receiving through a communication port of the multi-state device a stimulus from the remote control, transmitting from the multi-state device to the remote control an identifying code of the multi-state device using a line-of-sight carrier, transmitting from the remote control to the multi-state device a code, comparing in a controller of the multi-state device the code received from the remote control to the identifying code of the multi-state device, the code received from the remote control being the identifying code transmitted by the multi-state device converted into the identifying code of the multi-state device.

### BRIEF DESCRIPTION OF THE DRAWINGS

The accompanying drawings illustrate various non-limiting, example, innovative aspects in accordance with the present descriptions:
- Figure 1 schematically represents a first embodiment of a device configured to communicate with a remote control according to the invention;
- Figure 2 schematically represents a second embodiment of a device configured to communicate with a remote control according to the invention;
- Figure 3 schematically represents a third embodiment of a device configured to communicate with a remote control according to the invention;
- Figure 4 schematically represents a fourth embodiment of a device configured to communicate with a remote control according to the invention;
- Figure 5 represents a block diagram of the steps of a method for communicating of a device with the remote control according to the invention;
- Figure 6 represents a block diagram of the steps of a method for remotely activating and/or deactivating a switch of the device from a remote control according to the invention;

For the sake of clarity, the same elements have the same references in the various figures and the different aspects of embodiments can be combined when appropriate.

### DETAILED DESCRIPTION

As previously mentioned, although many of the features of this invention are described in relation to a smoke detector, it is understood that they are generally applicable to a detector of a species, chemical compound or reaction. In this case, the term species is to be understood as a species like smoke or as a chemical species or molecule such as carbon monoxide, AmO2 or other chemical compounds or reactions used for smoke detectors. Moreover, these features are also applicable to many other devices such as sensors or the like, as further mentioned in the examples. In case of some sensors, the alert module may be a separated module or the remote control itself.

More generally the invention relates to a multi-state device and a remote control configured to send a signal to the multi-state device. The invention ensures that the user remotely designates the intended multi-state device with the remote control.

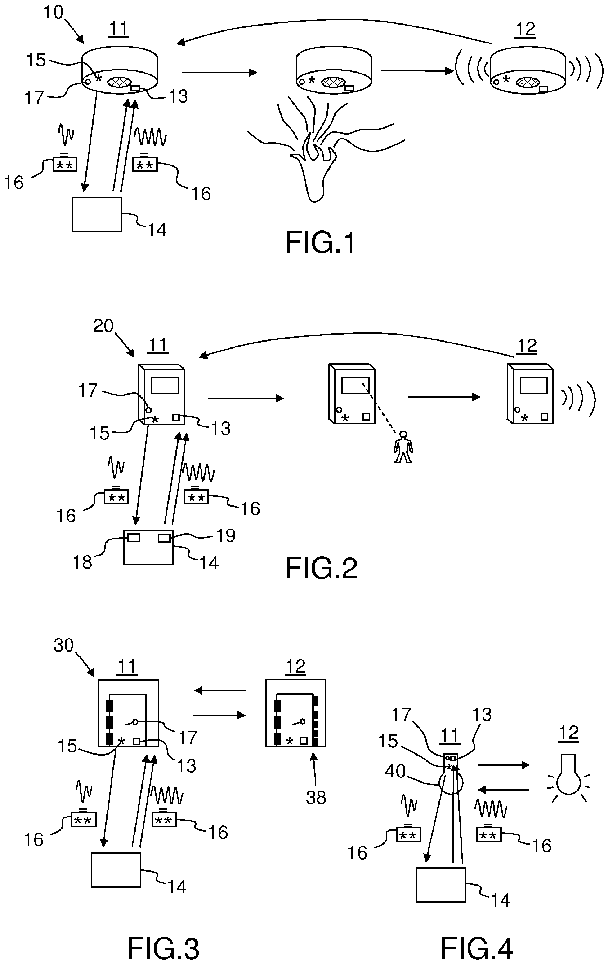

**Figure 1** schematically represents a first embodiment of a device 10 configured to communicate with a remote control 14 according to the invention. The device 10 is a multi-state device. The multi-state device 10 is configured to receive a stimulus from a remote control 14. The multi-state device 10 comprises a communication port 13 configured to receive one or more of a stimulus or a change state command from the remote control 14. The multi-state device 10 comprises a transmitter 15 of an identifying code 16 using a line-of-sight carrier, a controller 17 configured to compare an identifying code received from the remote control 14 to the identifying code 16 of the multi-state device. The switch is triggered after a communication of an identifying code 16 between the multi-state device 10 and the remote control 14 through the RF communication link and the transmitter 15. The communication port may be wired or wireless. As an example, the communication port may be an RF communication link. It can be Wi-Fi, NFC or Bluetooth. It is also possible to add a module for other RF bands/protocols. Or the communication port may be via a web server, with a connection of the smoke detector to a web server (wired or wireless) and the remote control is connected to the web server. The line-of-sight carrier may be an infrared beam or any optical signal that can be caught by the remote control, either through a specific receiver or through a camera.

The multi-state device 10 represented in figure 1 is as example a smoke detector that can switch from one state to another state, i.e. from the state on to the state off and/or from the state off to the state on.

A user may wish to switch off the smoke detector 10 placed in the kitchen, before cooking, to avoid the alarm of the smoke detector to be triggered on if some smoke escapes from a cooking equipment when in operation. In this case, the user only wants the smoke detector 10 placed in the kitchen to be switched off. Alternatively, the smoke detector 10 may be temporarily switched off thanks to a time out that automatically puts the smoke detector on beyond a predetermined time lapse after being switched off. The smoke detectors placed in the other rooms should be kept on. It is therefore necessary to ensure that the user designates the smoke detector 10 of the kitchen, when sending the request to switch off.

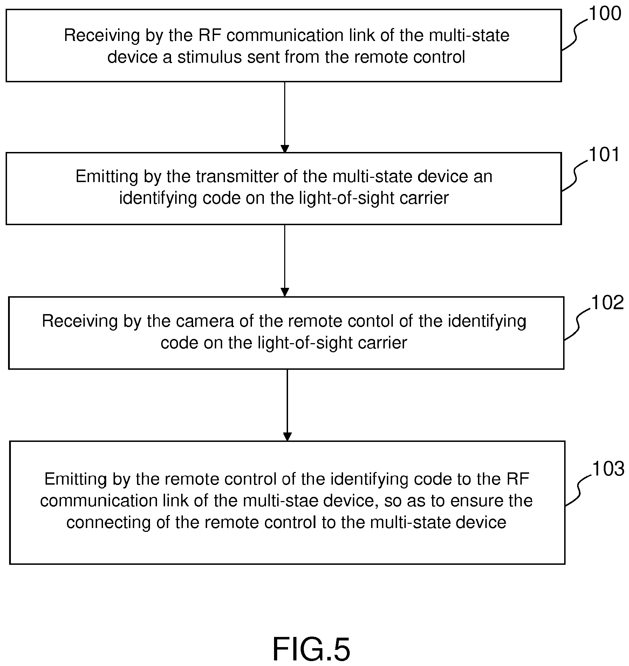

First, the user has to connect the multi-state device 10 to the remote control 14, in a secure manner. The steps of the method for connecting the multi-state device 10 (smoke detector) to the remote control 14 are illustrated in Figure 5. The method for connecting the multi-state device 10 to the remote control 14 comprises a step 100 of receiving through the communication port 13 of the multi-state device 10 a stimulus from the remote control 14, a step of communicating between the remote control 14 through the RF communication link and the multi-state device 10 through the transmitter 15 of an identifying code 16.

The step of communicating between the remote control 14 and the multi-state device 10 of the identifying code 16 may be divided into a step 101 of emitting by the transmitter 15 of the multi-state device 10 the identifying code 16 using a line-of-sight carrier, a step 102 of receiving by the remote control 14 of the identifying code 16 on a line-of-sight carrier, and a step 103 of emitting by the remote control 14 of the identifying code 16 to the communication link of the multi-state device 10, so as to ensure the connecting of the remote control 14 to the multi-state device 10.

The step of communicating between the remote control 14 and the multi-state device 10 of the identifying code 16 may be also divided into a step 101 of emitting by the remote control 14 the identifying code 16 to the RF communication link of the multi-state device 10, a step 102 of receiving by the transmitter 15 of the multi-state device 10 of the identifying code 16, and a step 103 of emitting by the transmitter 15 of the multi-state device 10 of the identifying code 16, so as to ensure the connecting of the remote control 14 to the multi-state device 10.

The controller 17 of the multi-state device 10 is configured to make the multi-state device 10 switch from one state 11 to another state 12 after the step of communicating between the remote control 14 and the multi-state device 10 of the identifying code 16.

In the example of the smoke detector in the kitchen, the user may want to connect the remote control 14 to the smoke detector 10 in the kitchen. The user sends via the remote control a stimulus to the smoke detector 10 in the kitchen. The stimulus may be sent using a dedicated key on the remote control. For example, in case the remote control is a smart phone, the user may use a dedicated application on the smart phone. This stimulus is a stimulus configured to be received by the RF communication port 13 of the smoke detector 10. The RF communication port 13 of the smoke detector 10 receives this stimulus and sends as a response through its transmitter 15 to the remote control 14 the identifying code 16 on a line-of-sight carrier. The remote control 14 receives the identifying code 16 on a line-of-sight carrier. And the remote control 14 sends the identifying code 16 to the RF communication port 13 of the smoke detector 10. This corresponds to a communication of the identifying code 16 between the remote control 14 and the smoke detector 10, using a line-of-sight carrier on the one hand and on a link on the other hand. In a more industrial environment, the communication of the identifying code may be ciphered to improve security. It is thus ensured that the remote control 14 is now connected to the smoke detector 10 in the kitchen since they exchanged the same identifying code 16.

The RF communication port 13 of the multi-state device 10 is advantageously configured to receive a change state command from the remote control 14 to activate the controller 17 to make the multi-state device 10 switch from the one state 11 to the another state 12.

In our previous example, once the remote control 14 is connected to the smoke detector 10 in the kitchen after having exchanged the same identifying code 16, the user is now able to switch off the smoke detector. The remote control 14 sends to the RF communication port 13 of the smoke detector 10 the change state command (in our example: switch the smoke detector 10 off) to activate the controller 17 of the smoke detector 10 to make the smoke detector 10 switch from the on-state to the off-state.

The example of the smoke detector 10 in the kitchen switched off before cooking is an example of a preventive use of the invention. The invention may also be applied in an active use of the smoke detector 10, i.e. when the alarm is set on, as illustrated in figure 1, in order to deactivate the smoke detector to stop the sound signal (either in case of a false alarm or when the corresponding security measures were adopted).

The smoke detector can be totally deactivated via the invention, or only the alarm part of it (this could be useful in case of a deaf person who may want to change it for a visual alarm, for instance in a hotel room).

The smoke detector 10 comprises an alarm to be set on (state 12) when it detects smoke and off (state 11) otherwise. The smoke detector 10 has its alarm set off (state 11) on the left hand side of figure 1. When detecting smoke (as represented in the middle of figure 1), the alarm of the smoke detector 10 is triggered on as a normal use of a smoke detector. The smoke detector 10 has its alarm set on (state 12) on the right hand side of figure 1. Being then aware of a fire, the user may call the fire department or try by himself to extinguish the fire. It may be no more necessary to hear the alarm of the smoke detector, in particular while talking with firemen on the phone. The user may then wish to switch the alarm to the state off (state 11). The user needs to connect the remote control 14 to the smoke detector 10 having its alarm on. The remote control sends a stimulus to this smoke detector 10. The RF communication port 13 of the smoke detector 10 receives this stimulus and as a response sends through its transmitter 15 to the remote control 14 the identifying code 16 on a line-of-sight carrier. The remote control 14 receives the identifying code 16 on a line-of-sight carrier. And the remote control 14 sends the identifying code 16 to the RF communication port 13 of the smoke detector 10. This corresponds to a communication of the identifying code 16 between the remote control 14 and the smoke detector 10, using a line-of-sight carrier on the one hand and on an RF link on the other hand. It is thus ensured that the remote control 14 is now connected to the smoke detector 10 since they exchanged the same identifying code 16. Then the remote control 14 sends to the RF communication port 13 of the smoke detector 10 a change state command to activate the controller 17 to make the smoke detector 10 switch from the one state 12 (alarm being on) to the another state 11 (alarm being off).

The invention was presented in figure 1 with a smoke detector. Similarly, the multi-state device 10 can also be a detector of a species comprising an alarm to be set on when the multi-state device 10 detects the species and off otherwise, the one state 11 being one of the alarm being off or the alarm being on and the another state 12 being then the alarm being on or the alarm being off. The species can be for example carbon monoxide which is a colorless, odorless gas, and toxic to humans when encountered in concentrations above about 35 ppm, or nitrogen monoxide, or any species whose level is to be checked.

The invention enables to remotely control a multi-state device using a remote control while ensuring to designate the multi-state device that is to be controlled. The multi-state device according to the invention allows making sure that there is a remote communication with the desired device. The invention makes it possible to send a command to one particular device amongst a plurality of the same devices and to ensure the user he is designating the one particular device.

**Figure 2** schematically represents a second embodiment of a device configured to communicate with a remote control according to the invention. In this embodiment, the multi-state device 20 is a presence sensor comprising an alarm to be set on when the multi-state device 20 detects a presence in a room and off otherwise, the one state 11 being one of the alarm being off or the alarm being on and the another state 12 being then the alarm being on or the alarm being off.

In this embodiment, the user may want to switch the presence sensor 20 in his house (i.e. generally in one room) when coming back home. The user wants to connect the remote control 14 to the presence sensor 20 in the room to deactivate the presence sensor 20. The remote control 14 sends a stimulus to the presence sensor 20. This stimulus is a stimulus configured to be received by the RF communication port 13 of the presence sensor 20. The RF communication port 13 of the presence sensor 20 receives this stimulus and as a response sends through its transmitter 15 to the remote control 14 the identifying code 16 on a line-of-sight carrier. The remote control 14 receives the identifying code 16 on a line-of-sight carrier. And the remote control 14 sends the identifying code 16 to the RF communication port 13 of the presence sensor 20. This corresponds to a communication of the identifying code 16 between the remote control 14 and the presence sensor 20, on a line-of-sight carrier on the one hand and on an RF link on the other hand. It is thus ensured that the remote control 14 is now connected to the presence sensor 20 in the room (and for example not to another presence sensor in another room or in the neighborhood) since they exchanged the same identifying code 16.

The RF communication port 13 of the multi-state device 20 is advantageously configured to receive a change state command from the remote control 14 to activate the controller 17 to make the multi-state device 20 switch from the one state 11 to the another state 12.

Once the remote control 14 is connected to the presence sensor 20 in the room after having exchanged the same identifying code 16, the user is now able to switch off the presence sensor. The remote control 14 sends to the RF communication port 13 of the presence sensor 20 the change state command (in our example: switch the presence sensor 20 off). Afterwards the controller 17 of the presence sensor 20 is activated to make the presence sensor 20 switch from the state on to the state off.

Similarly to the smoke detector 10, the user may want to deactivate the presence sensor 20 when its alarm is on. The presence sensor 20 comprises an alarm to be set on (state 12) when it detects a presence in its vicinity and off (state 11) otherwise. The presence sensor 20 has its alarm set off (state 11) on the left hand side of figure 2. When detecting a presence (as represented in the middle of figure 2), the alarm of the presence sensor 20 is triggered on as a normal use of a presence sensor. The presence sensor 20 has its alarm set on (state 12) on the right hand side of figure 2. Being then aware of a presence in the room, the user may call at the police or check himself who is in the room or even simply notice that this is an animal that managed to come into the room and made the presence sensor set the alarm on. Depending on the situation, it may be no more necessary to hear the alarm of the presence sensor. In the case the user wishes to switch the alarm to the state off (state 11), the user needs to connect the remote control 14 to the presence sensor 20 having its alarm on. The remote control sends a stimulus to this presence sensor 20. The RF communication port 13 of the presence sensor 20 receives this stimulus and as a response sends through its transmitter 15 to the remote control 14 the identifying code 16 on a line-of-sight carrier. The remote control 14 receives the identifying code 16 on a line-of-sight carrier. And the remote control 14 sends the identifying code 16 to the RF communication port 13 of the presence sensor 20. This corresponds to a communication of the identifying code 16 between the remote control 14 and the presence sensor 20, on a line-of-sight carrier on the one hand and on RF way on the other hand. It is ensured that the remote control 14 is now connected to the presence sensor 20 since they exchanged the same identifying code 16. Then the remote control 14 sends to RF communication port 13 of the presence sensor 20 a change state command to activate the controller 17 to make the presence sensor 20 switch from the one state 12 (alarm being on) to the another state 11 (alarm being off). The alarm of the presence sensor 20 is then off.

It may be noted that a presence sensor may be configured to send a command to another equipment when it detects a presence, for example switch on a lamp and/or activate a heating system to regulate a room temperature. The invention operates as described before: the presence sensor comprises a command to be set on (state 12) when it detects a presence in its vicinity and off (state 11) otherwise. When detecting a presence (as represented in the middle of figure 2), the command of the presence sensor 20 is triggered on and sent to the other equipment (for example a lamp or heating system to be set on). The presence sensor 20 has its command set on (state 12) on the right hand side of figure 2. In the case the user wishes to switch the command to the state off (state 11), the user needs to connect the remote control 14 to the presence sensor 20 having its command on the on-state. In other words, in the case the presence sensor is configured to send a command to another equipment, the invention operates in the same way as described before. In this particular case, the alarm is to be understood as a signal to be sent in the on-state (sound signal for an alarm or command to another equipment for the case of communication between the presence sensor and another equipment) and no signal to be sent in the off-state.

**Figure 3** schematically represents a third embodiment of a device configured to communicate with a remote control according to the invention. In this embodiment, the multi-state device 30 is an opening comprising a lock 38 to be in a locked position when the multi-state device 30 is in the locked position and in an unlocked position otherwise, the one state 11 being one of the unlocked position or the locked position and the another state 12 being then the locked position or the unlocked position of the lock.

In this embodiment, the user may want to lock the opening 30 (a door in the example of figure 3) when leaving home without having to use a key of the lock. The user wants to connect the remote control 14 to the opening 30 to lock the opening 30. The remote control 14 sends a stimulus to the opening 30. This stimulus is a stimulus configured to be received by the RF communication port 13 of the opening 30. The RF communication port 13 of the opening 30 receives this stimulus and as a response sends through its transmitter 15 to the remote control 14 the identifying code 16 on a line-of-sight carrier. The remote control 14 receives the identifying code 16 on a line-of-sight carrier. And the remote control 14 sends the identifying code 16 to the RF communication port 13 of the opening 30. This corresponds to a communication of the identifying code 16 between the remote control 14 and the opening 30, on a line-of-sight carrier on the one hand and on an RF link on the other hand. It is ensured that the remote control 14 is now connected to the opening 30 in the room (and not to another opening for example on another side of the house or in the neighborhood) since they exchanged the same identifying code 16.

The RF communication port 13 of the multi-state device 30 is advantageously configured to receive a change state command from the remote control 14 to activate the controller 17 to make the multi-state device 30 switch from the one state 11 to the another state 12.

Once the remote control 14 is connected to the opening 30 after having exchanged the same identifying code 16, the user is now able to lock the opening. The remote control 14 sends to the RF communication port 13 of the opening 30 the change state command (in our example: lock the opening 30) to activate the controller 17 of the opening 30 to make the opening 30 switch from the state unlocked to the state locked.

Conversely, when coming back home, the user may want to unlock the opening 30. In the case the user wishes to switch the position from the locked position (state 12) to the unlocked position (state 11), the user needs to connect the remote control 14 to the opening 30. The remote control sends a stimulus to the opening 30. The RF communication port 13 of the opening 30 receives this stimulus and as a response sends through its transmitter 15 to the remote control 14 the identifying code 16 on a line-of-sight carrier. The remote control 14 receives the identifying code 16 on a line-of-sight carrier. And the remote control 14 sends the identifying code 16 to the RF communication port 13 of the opening 30. This corresponds to a communication of the identifying code 16 between the remote control 14 and the opening 30, on a line-of-sight carrier on the one hand and on RF way on the other hand. It is ensured that the remote control 14 is now connected to the opening 30 since they exchanged the same identifying code 16. Then the remote control 14 sends to RF communication port 13 of the opening 30 a change state command to activate the controller 17 to make the opening 30 switch from the one state 12 (locked position) to the another state 11 (unlocked position). The opening 30 is then in the unlocked position (11) and the user can open the opening 30.

An example of a multi-state device with more than two states can be a thermostat for which the user sets the desired temperature in a range from 5 to 30°C and wishes to designate one (or more) particular thermostat temperature in one (or more) particular room. After the communication between the remote control 14 and the multi-state thermostat through the RF transmitter 19 of the identifying code 16, the multi-state thermostat is connected with the remote control and it is possible to make the multi-state thermostat switch from one state to one of the other possible states.

**Figure 4** schematically represents a fourth embodiment of a device configured to communicate with a remote control according to the invention. In this embodiment, the multi-state device 40 is a lamp having a light on when the multi-state device 40 is in an on position and a light off when the multi-state device 40 is in an off position, the one state 11 being the off position and the another state 12 being the on position.

In this embodiment, the user may want to turn the light on when entering the room in which the lamp is without having to use any light switch located somewhere on a wall. The user wants to connect the remote control 14 to the lamp 40 to put the lamp 40 in the on position. The remote control 14 sends a stimulus to the lamp 40. This stimulus is a stimulus configured to be received by the RF communication port 13 of the lamp 40. The RF communication port 13 of the lamp 40 receives this stimulus and as a response sends through its transmitter 15 to the remote control 14 the identifying code 16 on a line-of-sight carrier. The remote control 14 receives the identifying code 16 on a line-of-sight carrier. And the remote control 14 sends the identifying code 16 to the RF communication port 13 of the lamp 40. This corresponds to a communication of the identifying code 16 between the remote control 14 and the lamp 40, using a line-of-sight carrier on the one hand and on an RF link on the other hand. It is ensured that the remote control 14 is now connected to the right lamp 40 in the room (and not to another lamp for example on another corner of the room or in another room of the house) since they exchanged the same identifying code 16.

The RF communication port 13 of the multi-state device 40 is advantageously configured to receive a change state command from the remote control 14 to activate the controller 17 to make the multi-state device 40 switch from the one state 11 to the another state 12.

Once the remote control 14 is connected to the lamp 40 after having exchanged the same identifying code 16, the user is now able to place the lamp in the on position. The remote control 14 sends to the RF communication port 13 of the lamp 40 the change state command (in our example: position on of the lamp) to activate the controller 17 of the lamp 40 to make the lamp 40 switch from the state off to the state on.

Conversely, when leaving the room, the user may want to put the lamp 40 in the off position. In the case the user wishes to switch the position from the on position (state 12) to the off position (state 11), the user needs to connect the remote control 14 to the lamp 40. The remote control sends a stimulus to the lamp 40. The RF communication port 13 of the lamp 40 receives this stimulus and as a response sends through its transmitter 15 to the remote control 14 the identifying code 16 on a line-of-sight carrier. The remote control 14 receives the identifying code 16 on a line-of-sight carrier. And the remote control 14 sends the identifying code 16 to the RF communication port 13 of the lamp 40. This corresponds to a communication of the identifying code 16 between the remote control 14 and the lamp 40, on a line-of-sight carrier on the one hand and on an RF link on the other hand. It is ensured that the remote control 14 is now connected to the lamp 40 since they exchanged the same identifying code 16. Then the remote control 14 sends to RF communication port 13 of the lamp 40 a change state command to activate the controller 17 to make the lamp 40 switch from the one state 12 (on position) to the another state 11 (off position). The lamp 40 is then in the off position (11).

The invention also relates to a remote control 14 configured to connect to a multi-state device 10, 20, 30, 40. The remote control 14 is configured to receive from the multi-state device 10, 20, 30, 40 an identifying code 16 on a line-of-sight carrier, and an RF transmitter 19 of an identifying code 16. For example, the remote control may comprise a camera 18. The remote control 14 is configured to send a change state command to activate or deactivate a controller 17 of the multi-state device 10, 20, 30, 40, to make the multi-state device 10, 20, 30, 40 switch from one state 11 to another state 12 after the communication between the remote control 14 through the camera 18 and the multi-state device 10, 20, 30, 40 through the RF transmitter 19 of the identifying code 16.

According to an embodiment of the invention, the remote control 14 is a smart phone, or a tablet, that may comprise a camera 18 configured to receive the identifying code 16 on a line-of-sight carrier, wherein the smart phone comprises an RF transmitter 19 of an identifying code 16, the identifying code 16 sent through the RF transmitter being identical to the identifying code 16 on the line-of-sight carrier. The smart phone or the tablet enables to catch the identifying code 16 from the multi-state device and to send it back to the multi-state device via an RF transmitter. Such a remote control may contain a software application configurable to send a particular version of the identifying code to activate or deactivate the controller of the multi-state device depending on the various possibilities namely in the case of the multi-state device with more than two states. The remote control 14 may also be a server.

The remote control 14 comprises a conversion unit. This conversion unit converts the identifying code 16 on the line-of-sight carrier into the RF identifying code 16. The RF identifying code 16 is then sent to the multi-state device through the RF transmitter 19 of the remote control 14. Therefore, the same identifying code 16 with two different supports is exchanged between the remote control and the multi-state device.

When operating with various multi-state devices, each multi-state device sends through its transmitter 15 its own identifying code on a line-of-sight carrier. The remote control 14 receives the plurality of identifying codes on a line-of sight carrier, converts them into a plurality of RF identifying codes sent back to the multi-state devices. The controller of each multi-state device makes the multi-state device switch from one state 11 to another state 12 after the communication between the remote control 14 and the multi-state device of the same identifying code. Since each multi-state device sent its own identifying code on a line-of-sight carrier, each multi-state device receives then its own identifying code as an RF identifying code. Therefore the communication of the identifying codes is ensured, even if there are various multi-state devices.

**Figure 5** represents a block diagram of the steps of a method for communicating of a device with the remote control according to the invention. The method for communicating of a multi-state device 10, 20, 30, 40 with a remote control 14 according to the invention comprises the step 100 of receiving through the RF communication port 13 of the multi-state device 10, 20, 30, 40 a stimulus from the remote control 14 and a step of communicating between the remote control 14 through the RF communication port 13 and the multi-state device 10, 20, 30, 40 through the transmitter 15 of an identifying code 16. Furthermore, the controller 17 is advantageously configured to make the multi-state device 10, 20, 30, 40 switch from one state 11 to another state 12 after the step of communicating between the remote control 14 and the multi-state device 10, 20, 30, 40 of the identifying code 16.

As mentioned before, the step of communicating between the remote control 14 and the multi-state device of the identifying code 16 may be divided into a step 101 of emitting by the transmitter 15 of the multi-state device the identifying code 16 using a line-of-sight carrier, a step 102 of receiving by the remote control 14 of the identifying code 16 on a line-of-sight carrier, and a step 103 of emitting by the remote control 14 of the identifying code 16 to the RF communication port 13 of the multi-state device, so as to ensure the connecting of the remote control 14 to the multi-state device.

The step of communicating between the remote control 14 and the multi-state device of the identifying code 16 may be also divided into a step 101 of emitting by the remote control 14 the identifying code 16 to the RF communication port 13 of the multi-state device, a step 102 of receiving by the transmitter 15 of the multi-state device of the identifying code 16, and a step 103 of emitting by the transmitter 15 of the multi-state device of the identifying code 16, so as to ensure the connecting of the remote control 14 to the multi-state device. In other words, the communication between the remote control and the multi-state device may be initiated either by the remote control or by the multi-state device.

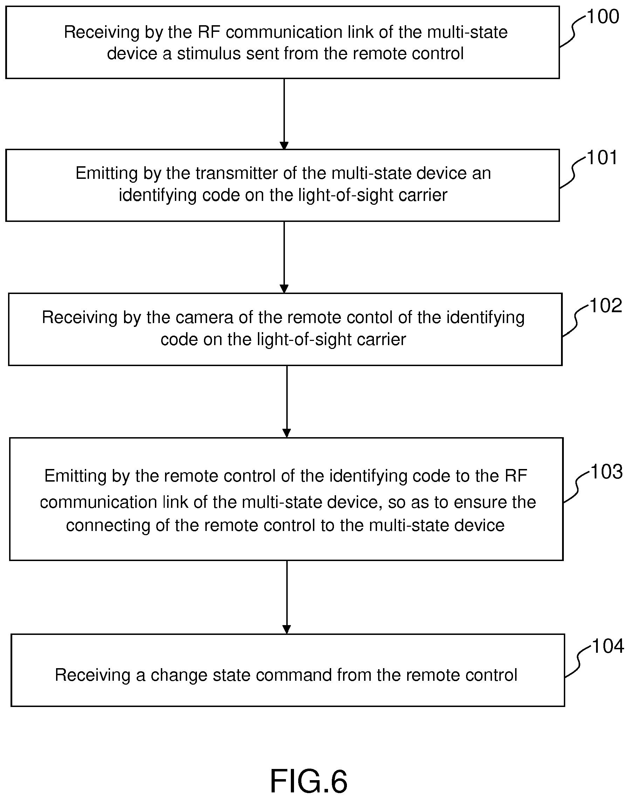

**Figure 6** represents a block diagram of the steps of a method for remotely activating and/or deactivating a switch of the device from a remote control according to the invention. Further to the steps of the method for communicating of a multi-state device with a remote control, the method for activating or deactivating further comprises a step 104 of receiving a change state command from the remote control 14 to activate or deactivate the controller 17, to make the multi-state device 10, 20, 30, 40 switch from one state 11 to another state 12 after the communication between the remote control 14 through the RF communication link 13 and the multi-state device 10, 20, 30, 40 through the transmitter 15 of the identifying code 16.

On top of ensuring that the user remotely designates the intended multi-state device with the remote control, the invention offers additional advantages. In particular, the invention offers the possibility to command various devices with the same remote control. The invention is easy to implement at a low cost. The strength of the invention is also to be underlined. Indeed it needs no further device than the remote control, thus reducing the risk of failure due to the use of many devices. In some embodiments, it can be only a dedicated application downloaded on a remote control (in particular in smartphone example).

The examples disclosed in this specification are therefore only illustrative of some embodiments of the invention. They do not in any manner limit the scope of said invention which is defined by the appended claims.

## Claims

1. A multi-state device (10, 20, 30, 40) comprising:
- a communication port (13) configured to receive one or more of a stimulus or a change state command from a remote control (14),
- a transmitter (15) of an identifying code (16) using a line-of-sight carrier,
- a controller (17) configured to compare a code received from the remote control (14) to the identifying code (16) of the multi-state device, the code received from the remote control being the identifying code transmitted by the multi-state device which has been converted into the identifying code of the multi-state device.

2. The multi-state device (10, 20, 30, 40) according to claim 1, wherein the communication port (13) is further configured to receive a change state command from the remote control (14) to activate the controller (17) to make the multi-state device (10, 20, 30, 40) switch from the one state (11) to the another state (12).

3. The multi-state device (10, 20, 30, 40) according to one of claims 1 or 2, wherein the communication port is an RF communication port.

4. The multi-state device (10) according to one of claims 1 to 3, wherein the multi-state device (10) is a detector of a species comprising an alarm to be set on when the multi-state device (10) detects the species and off otherwise, the one state (11) being one of the alarm being off or the alarm being on and the another state (12) being then the alarm being on or the alarm being off.

5. The multi-state device (20) according to one of claims 1 to 3, wherein the multi-state device (20) is a presence sensor comprising an alarm to be set on when the multi-state device (20) detects a presence in a room and off otherwise, the one state (11) being one of the alarm being off or the alarm being on and the another state (12) being then the alarm being on or the alarm being off.

6. The multi-state device (20) according to one of claims 1 to 3, wherein the multi-state device (20) is a presence sensor configured to send a signal to another equipment when the multi-state device (20) detects a presence in a room and to send no signal otherwise, the one state (11) being one of no signal to be sent or the signal to be sent and the another state (12) being then the signal to be sent or no signal to be sent.

7. The multi-state device (30) according to one of claims 1 to 3, wherein the multi-state device (30) is an opening comprising a lock (38) to be in a locked position when the multi-state device (30) is in the locked position and in an unlocked position otherwise, the one state (11) being one of the unlocked position or the locked position and the another state (12) being then the locked position or the unlocked position of the lock.

8. The multi-state device (40) according to one of claims 1 to 3, wherein the multi-state device (40) is a lamp having a light on when the multi-state device (40) is in a on position and a light off when the multi-state device (40) is in an off position, the one state (11) being one of the off position or the on position and the another state (12) being then the on position or the off position.

9. The multi-state device (10, 20, 30, 40) according to claims 1 to 8, wherein the remote control (14) is a smart phone configured to receive the identifying code (16) using a line-of-sight carrier, wherein the smart phone comprises a transmitter (19) of an identifying code (16), the identifying code (16) sent through the transmitter of the smart phone being identical to the identifying code (16) on the line-of-sight carrier of the multi-state device.

10. The multi-state device (10, 20, 30, 40) according to claims 1 to 8, wherein the remote control (14) comprises a camera configured to receive the identifying code (16) using a line-of-sight carrier, wherein the remote control comprises a transmitter (19) of an identifying code (16), the identifying code (16) sent through the transmitter of the remote control being identical to the identifying code (16) on the line-of-sight carrier of the multi-state device.

11. The multi-state device (10, 20, 30, 40) according to one of claims 1 to 10, wherein the line-of-sight carrier is an infrared beam, or optical signal.

12. A remote control (14) configured to connect to a multi-state device (10, 20, 30, 40), comprising:
- a RF transmitter configured to transmit one or more of a stimulus or a change state command to the multi-state device;
- a receiver configured to receive from the multi-state device (10, 20, 30, 40) an identifying code (16) using a line-of-sight carrier, and to convert the identifying code received from the multi-state device into a RF identifying code of the multi-state device, the RF identifying code being identical to the identifying code on the line-of-sight carrier, the RF transmitter being configured to send the RF identifying code to the multi-state device.

13. The remote control (14) according to claim 12 configured to send a change state command to activate or deactivate a controller (17) of the multi-state device (10, 20, 30, 40), to make the multi-state device (10, 20, 30, 40) switch from one state (11) to another state (12) after the communication with the multi-state device (10, 20, 30, 40) of the identifying code (16) of the multi-state device.

14. A method of controlling a multi-state device (10, 20, 30, 40) using a remote control (14), the method comprising:
- receiving through a communication port (13) of the multi-state device (10, 20, 30, 40) a stimulus from the remote control (14),
- transmitting from the multi-state device to the remote control an identifying code of the multi-state device using a line-of-sight carrier;
- transmitting from the remote control to the multi-state device a code;
- comparing in a controller of the multi-state device the code received from the remote control to the identifying code of the multi-state device, the code received from the remote control being the identifying code transmitted by the multi-state device which has been converted into the identifying code of the multi-state device.

## Patentansprüche

1. Vielfachzustandsvorrichtung (10, 20, 30, 40), umfassend:
- einen Kommunikationsport (13), der dafür konfiguriert ist, eines oder mehr von einem Stimulus oder einem Zustandsänderungsbefehl von einer Fernbedienung (14) zu empfangen,
- einen Sender (15) eines Identifizierungscodes (16) unter Verwendung eines Sichtlinien-Trägers,
- eine Steuerungseinrichtung (17), die dafür konfiguriert ist, einen von der Fernbedienung (14) empfangenen Code mit dem Identifizierungscode (16) der Vielfachzustandsvorrichtung zu vergleichen, wobei der von der Fernbedienung empfangene Code der von der Vielfachzustandsvorrichtung übertragene Identifizierungscode ist, der in den Identifizierungscode der Vielfachzustandsvorrichtung konvertiert worden ist.

2. Vielfachzustandsvorrichtung (10, 20, 30, 40) nach Anspruch 1, worin der Kommunikationsport (13) ferner dafür konfiguriert ist, einen Zustandsänderungsbefehl von der Fernsteuerung (14) zu empfangen, um die Steuerungseinrichtung (17) zu aktivieren, damit sie die Vielfachzustandsvorrichtung (10, 20, 30, 40) veranlasst, von dem einen Zustand (11) in den anderen Zustand (12) zu wechseln.

3. Vielfachzustandsvorrichtung (10, 20, 30, 40) nach einem der Ansprüche 1 oder 2, worin der Kommunikationsport ein HF-Kommunikationsport ist.

4. Vielfachzustandsvorrichtung (10) nach einem der Ansprüche 1 bis 3, worin die Vielfachzustandsvorrichtung (10) ein Detektor einer Spezies ist, die einen Alarm umfasst, der einzuschalten ist, wenn die Vielfachzustandsvorrichtung (10) die Spezies ermittelt, und andernfalls auszuschalten ist, wobei der eine Zustand (11) entweder der ausgeschaltete Alarm oder der eingeschaltete Alarm ist und der andere Zustand (12) dann der eingeschaltete Alarm oder der ausgeschaltete Alarm ist.

5. Vielfachzustandsvorrichtung (20) nach einem der Ansprüche 1 bis 3, worin die Vielfachzustandsvorrichtung (20) ein Anwesenheitssensor ist, der einen Alarm umfasst, der einzuschalten ist, wenn die Vielfachzustandsvorrichtung (20) eine Anwesenheit in einem Raum ermittelt, und andernfalls auszuschalten ist, wobei der eine Zustand (11) entweder der ausgeschaltete Alarm oder der eingeschaltete Alarm ist und der andere Zustand (12) dann der eingeschaltete Alarm oder der ausgeschaltete Alarm ist.

6. Vielfachzustandsvorrichtung (20) nach einem der Ansprüche 1 bis 3, worin die Vielfachzustandsvorrichtung (20) ein Anwesenheitssensor ist, der dafür konfiguriert ist, ein Signal an eine andere Einrichtung zu senden, wenn die Vielfachzustandsvorrichtung (20) eine Anwesenheit in einem Raum ermittelt, und andernfalls kein Signal zu senden, wobei der eine Zustand (11) einer von keinem zu sendenden Signal oder dem zu sendenden Signal ist und der andere Zustand (12) dann das zu sendende Signal oder kein zu sendendes Signal ist.

7. Vielfachzustandsvorrichtung (30) nach einem der Ansprüche 1 bis 3, worin die Vielfachzustandsvorrichtung (30) eine Öffnung ist, die ein Schloss (38) umfasst, das in einer verriegelten Stellung sein soll, wenn die Vielfachzustandsvorrichtung (30) in der verriegelten Stellung ist, und andernfalls in einer entriegelten Stellung, wobei der eine Zustand (11) eines von der entriegelten Stellung oder der verriegelten Stellung ist und der andere Zustand (12) dann die verriegelte Stellung oder die entriegelte Stellung des Schlosses ist.

8. Vielfachzustandsvorrichtung (40) nach einem der Ansprüche 1 bis 3, worin die Vielfachzustandsvorrichtung (40) eine Lampe mit eingeschaltetem Licht ist, wenn die Vielfachzustandsvorrichtung (40) in einer An-Stellung ist, und mit einem ausgeschalteten Licht, wenn die Vielfachzustandsvorrichtung (40) in einer Aus-Stellung ist, wobei der eine Zustand (11) eines von der Aus-Stellung oder der An-Stellung ist und der andere Zustand (12) dann die An-Stellung oder die Aus-Stellung ist.

9. Vielfachzustandsvorrichtung (10, 20, 30, 40) nach Anspruch 1 bis 8, worin die Fernbedienung (14) ein Smartphone ist, das dafür konfiguriert ist, den Identifizierungscode (16) unter Verwendung eines Sichtlinien-Trägers zu empfangen, worin das Smartphone einen Sender (19) eines Identifizierungscodes (16) umfasst, wobei der über den Sender des Smartphones gesendete Identifizierungscode (16) identisch mit dem Identifizierungscode (16) auf dem Sichtlinien-Träger der Vielfachzustandsvorrichtung ist.

10. Vielfachzustandsvorrichtung (10, 20, 30, 40) nach Anspruch 1 bis 8, worin die Fernbedienung (14) eine Kamera umfasst, die dafür konfiguriert ist, den Identifizierungscode (16) unter Verwendung eines Sichtlinien-Trägers zu empfangen, worin die Fernbedienung einen Sender (19) eines Identifizierungscodes (16) umfasst, wobei der über den Sender der Fernbedienung gesendete Identifizierungscode (16) mit dem Identifizierungscode (16) auf dem Sichtlinien-Träger der Vielfachzustandsvorrichtung identisch ist.

11. Vielfachzustandsvorrichtung (10, 20, 30, 40) nach einem der Ansprüche 1 bis 10, worin der Sichtlinien-Träger ein Infrarotstrahl oder ein optisches Signal ist.

12. Fernbedienung (14), die dafür konfiguriert ist, sich mit einer Vielfachzustandsvorrichtung (10, 20, 30, 40) zu verbinden, umfassend:
- einen HF-Sender, der dafür konfiguriert ist, eines oder mehr von einem Stimulus oder einem Zustandsänderungsbefehl zur Vielfachzustandsvorrichtung zu übertragen;
- einen Empfänger, der dafür konfiguriert ist, von der Vielfachzustandsvorrichtung (10, 20, 30, 40) unter Verwendung eines Sichtlinien-Trägers einen Identifizierungscode (16) zu empfangen und den von der Vielfachzustandsvorrichtung empfangenen Identifizierungscode in einen HF-Identifizierungscode der Vielfachzustandsvorrichtung zu konvertieren,
wobei der HF-Identifizierungscode mit dem Identifizierungscode auf dem Sichtlinien-Träger identisch ist,
wobei der HF-Sender dafür konfiguriert ist, den HF-Identifizierungscode an die Vielfachzustandsvorrichtung zu senden.

13. Fernbedienung (14) nach Anspruch 12, die dafür konfiguriert ist, einen Zustandsänderungsbefehl zu senden, um eine Steuerungseinrichtung (17) der Vielfachzustandsvorrichtung (10, 20, 30, 40) zu aktivieren oder zu deaktivieren, um die Vielfachzustandsvorrichtung (10, 20, 30, 40) zu veranlassen, nach der Kommunikation des Identifizierungscodes (16) der Vielfachzustandsvorrichtung mit der Vielfachzustandsvorrichtung (10, 20, 30, 40) von einem Zustand (11) in einen anderen Zustand (12) zu wechseln.

14. Verfahren zur Steuerung einer Vielfachzustandsvorrichtung (10, 20, 30, 40) unter Verwendung einer Fernbedienung (14), wobei das Verfahren umfasst:
- Empfangen eines Stimulus von der Steuerungseinrichtung (14) über einen Kommunikationsport (13) der Vielfachzustandsvorrichtung (10, 20, 30, 40),
- Übertragen eines Identifizierungscodes der Vielfachzustandsvorrichtung von der Vielfachzustandsvorrichtung zur Fernbedienung unter Verwendung eines Sichtlinien-Trägers;
- Übertragen eines Codes von der Fernbedienung zur Vielfachzustandsvorrichtung;
- Vergleichen des von der Fernbedienung empfangenen Codes mit dem Identifizierungscode der Vielfachzustandsvorrichtung in einer Steuerungseinrichtung der Vielfachzustandsvorrichtung, wobei der von der Fernbedienung empfangene Code der von der Vielfachzustandsvorrichtung übertragene Identifizierungscode ist, der in den Identifizierungscode der Vielfachzustandsvorrichtung konvertiert worden ist.

## Revendications

1. Dispositif à états multiples (10, 20, 30, 40) comprenant :
- un port de communication (13) configuré pour recevoir un ou plus d'un stimulus ou d'une commande de changement d'état depuis une télécommande (14),
- un émetteur (15) d'un code d'identification (16) utilisant un support de ligne de visée,
- un contrôleur (17) configuré pour comparer un code reçu depuis la télécommande (14) au code d'identification (16) du dispositif à états multiples, le code reçu de la télécommande étant le code d'identification transmis par le dispositif à états multiples qui a été converti en le code d'identification du dispositif à états multiples.

2. Dispositif à états multiples (10, 20, 30, 40) selon la revendication 1, dans lequel le port de communication (13) est configuré en outre pour recevoir une commande de changement d'état de la télécommande (14) pour activer le dispositif de commande (17) afin d'amener le dispositif à états multiples (10, 20, 30, 40) à commuter d'un état (11) à un autre état (12).

3. Dispositif à états multiples (10, 20, 30, 40) selon l'une quelconque des revendications 1 ou 2, dans lequel le port de communication est un port de communication RF.

4. Dispositif à états multiples (10) selon l'une quelconque des revendications 1 à 3, dans lequel le dispositif à états multiples (10) est un détecteur d'une espèce comprenant une alarme à déclencher au moment où le dispositif à états multiples (10) détecte l'espèce et à inactiver dans le cas contraire, l'un état (11) étant un état de désactivation de l'alarme ou d'activation de l'alarme et l'autre état (12) étant alors un état d'activation de l'alarme ou de désactivation de l'alarme.

5. Dispositif à états multiples (20) selon l'une quelconque des revendications 1 à 3, dans lequel le dispositif à états multiples (20) est un détecteur de présence comprenant une alarme à déclencher lorsque le dispositif à états multiples (20) détecte une présence dans une pièce et à inactiver dans le cas contraire, l'un état (11) étant un état de désactivation de l'alarme ou d'activation de l'alarme et l'autre état (12) étant alors un état d'activation de l'alarme ou de désactivation de l'alarme.

6. Dispositif à états multiples (20) selon l'une des revendications 1 à 3, dans lequel le dispositif à états multiples (20) est un détecteur de présence configuré pour envoyer un signal à un autre équipement lorsque le dispositif à états multiples (20) détecte une présence dans une pièce et pour n'envoyer aucun signal dans le cas contraire, l'un état (11) étant aucun signal à envoyer ou le signal à envoyer et l'autre état (12) étant alors le signal à envoyer ou aucun signal à envoyer.

7. Dispositif à états multiples (30) selon l'une quelconque des revendications 1 à 3, dans lequel le dispositif à états multiples (30) est une ouverture comprenant une serrure (38) devant être dans une position verrouillée lorsque le dispositif à états multiples (30) est dans la position verrouillée et dans une position déverrouillée dans le cas contraire, l'un état (11) étant la position déverrouillée ou la position verrouillée et l'autre état (12) étant alors la position verrouillée ou la position déverrouillée de la serrure.

8. Dispositif à états multiples (40) selon l'une quelconque des revendications 1 à 3, dans lequel le dispositif à états multiples (40) est une lampe ayant une lumière allumée lorsque le dispositif à états multiples (40) est dans une position d'activation et une lumière éteinte lorsque le dispositif à états multiples (40) est dans une position de désactivation, l'un état (11) étant la position de désactivation ou la position d'activation et l'autre état (12) étant alors la position d'activation ou la position de désactivation.

9. Dispositif à états multiples (10, 20, 30, 40) selon l'une quelconque des revendications 1 à 8, dans lequel la télécommande (14) est un smartphone configuré pour recevoir le code d'identification (16) en utilisant un support de ligne de visée, dans lequel le smartphone comprend un émetteur (19) d'un code d'identification (16), le code d'identification (16) envoyé par l'émetteur du smartphone étant identique au code d'identification (16) du support de ligne de visée du dispositif à états multiples

10. Dispositif à états multiples (10, 20, 30, 40) selon l'une quelconque des revendications 1 à 8, dans lequel la télécommande (14) comprend une caméra configurée pour recevoir le code d'identification (16) en se servant d'un support de ligne de visée, dans lequel la télécommande comprend un émetteur (19) d'un code d'identification (16), le code d'identification (16) envoyé par l'émetteur de la télécommande étant identique au code d'identification (16) sur le support de ligne de visée du dispositif à états multiples.

11. Dispositif à états multiples (10, 20, 30, 40) selon l'une quelconque des revendications 1 à 10, dans lequel le support de ligne de visée est un faisceau infrarouge ou un signal optique.

12. Télécommande (14) configurée pour se connecter à un dispositif à états multiples (10, 20, 30, 40), comprenant :
- un émetteur RF configuré pour transmettre un ou plus d'un stimulus ou d'une commande de changement d'état au dispositif à états multiples,
- un récepteur configuré pour recevoir du dispositif à états multiples (10, 20, 30, 40) un code d'identification (16) en se servant d'un support de ligne de visée et pour convertir le code d'identification reçu du dispositif à états multiples en un code d'identification RF du dispositif à états multiples, le code d'identification RF étant identique au code d'identification du support de ligne de visée,
l'émetteur RF étant configuré pour envoyer le code d'identification RF au dispositif à états multiples.

13. Télécommande (14) selon la revendication 12 configurée pour envoyer une commande de changement d'état pour activer ou désactiver un contrôleur (17) du dispositif à états multiples (10, 20, 30, 40) afin d'amener le dispositif à états multiples (10, 20, 30, 40) à commuter d'un état (11) à un autre état (12) après la communication avec le dispositif à états multiples (10, 20, 30, 40) du code d'identification (16) du dispositif à états multiples.

14. Procédé de commande d'un dispositif à états multiples (10, 20, 30, 40) au moyen d'une télécommande (14), le procédé comprenant :
- la réception, par un port de communication (13) du dispositif à états multiples (10, 20, 30, 40), d'un stimulus depuis la télécommande (14),
- la transmission, par le dispositif à états multiples à la télécommande, d'un code d'identification du dispositif à états multiples en se servant d'un support de ligne de visée,
- la transmission depuis la télécommande d'un code au dispositif à états multiples,
- la comparaison, dans un contrôleur du dispositif à états multiples, du code reçu de la télécommande avec le code d'identification du dispositif à états multiples, le code reçu de la télécommande étant le code d'identification transmis par le dispositif à états multiples qui a été converti en le code d'identification du dispositif à états multiples.
